Europäisches Patentamt

European Patent Office

Office européen des brevets

(11) Veröffentlichungsnummer: **0 156 790**
**B1**

(12) **EUROPÄISCHE PATENTSCHRIFT**

(45) Veröffentlichungstag der Patentschrift: **13.06.90**

(21) Anmeldenummer: **85890054.1**

(22) Anmeldetag: **04.03.85**

(51) Int. Cl.⁵: **B 29 C 33/02,** D 21 G 1/02,
D 21 F 5/02

(54) Heizwalze.

(30) Priorität: **29.03.84 AT 1061/84**

(43) Veröffentlichungstag der Anmeldung:
**02.10.85 Patentblatt 85/40**

(45) Bekanntmachung des Hinweises auf die
Patenterteilung:
**13.06.90 Patentblatt 90/24**

(84) Benannte Vertragsstaaten:
**CH DE FR GB IT LI NL**

(56) Entgegenhaltungen:
**DE-A-1 806 618**
**DE-C- 756 867**
**DE-C- 896 972**
**DE-C-1 183 230**
**FR-A-2 130 689**
**GB-A- 619 457**
**GB-A-1 126 343**
**US-A-2 743 347**
**US-A-3 020 383**

(73) Patentinhaber: **Lenzing Aktiengesellschaft**
**A-4860 Lenzing (AT)**

(72) Erfinder: **Baumgartinger, Josef**
**Heuweg 4**
**A-4841 Ungenach (AT)**
Erfinder: **Rauch, Ernst**
**Halbmoos 17**
**A-4861 Aurach a. Hongar (AT)**
Erfinder: **Harms, Haio, Dr.**
**Schiffnerstrasse 16**
**A-4810 Gmunden (AT)**
Erfinder: **Wimmer, Adalbert**
**Am Tennisplatz 1**
**A-4840 Vöcklabruck (AT)**

(74) Vertreter: **Wolfram, Gustav, Dipl.-Ing.**
**Schwindgasse 7 P.O. Box 205**
**A-1041 Wien (AT)**

EP 0 156 790 B1

Courier Press, Leamington Spa, England.

**Beschreibung**

Die Erfindung betrifft eine Heizwalze zur Wärmebehandlung von geformten Materialien mit einer angetriebenen Hohlwelle und einem hohlen, allseitig geschlossenen, im Querschnitt kreisringförmigen Walzenkörper zur Aufnahme eines Wärmeübertragungsmediums, wobei Stromversorgungsleitungen für Heizelemente sowie elektrische Leitungen von Temperaturfühlern durch die Hohlwelle geführt sind und wobei die Hohlwelle mittels einer Nabe mit dem Walzenkörper verbunden ist.

Eine Heizwalze dieser Art ist in der US-A - 3,020,383 beschrieben. Der Ringraum zwischen der zylindrischen Innen und Außenwand des Walzenkörpers enthält ein Wärmeübertragungsmittel wie Tetrachlordiphenyl oder eine eutektische Mischung von Phenyläther und Diphenyl. Gemäß einer Ausführungsform dieser bekannten Heizwalze sind die Heizelemente sowie die Fühler im Hohlraum der Heizwalze angeordnet. Gemäß einer anderen Ausführungsform sind die Fühler ebenfalls im Hohlraum vorgesehen, die Heizelemente jedoch außerhalb des Hohlraumes angeordnet, u.zw. außerhalb der zylindrischen Innenwand.

In verschiedenen Herstellungs-, Veredelungs- und Weiterverarbeitungsphasen von einzelnen oder in Scharen laufenden Drähten, Fasern, Fäden und Garnen, von verschiedenen Flächengebilden, wie Papieren, Folien, Laminaten, Schichtstoffen, Faserstoffen, Preßplatten, Vliesen und textilen Bahnen und von flächig aufgearbeiteten Ausgangsmaterialien für derartige Flächengebilde (vor deren Verfestigung) ist eine Wärmebehandlung im Temperaturbereich bis 600°C erforderlich, so beispielsweise zum Trocknen, Verstrecken, Fixieren, Ausschrumpfen, Aushärten, Heißverpressen, Kaschieren, Laminieren, Auswalzen, Veredeln von Oberflächen, Imprägnieren oder bei verschiedensten thermochemischen Reaktionen.

Für diese Behandlungen werden u.a. Heizwalzen oder Heizgaletten, u.zw. einzeln oder zu mehreren — beispielsweise zu Duos, Trios oder als Preßvorrichtungen — kombiniert, verwendet. Bekannte Heizwalzen können mittels eines Wärmeübertragungsmediums beheizt sein, welches in Hohlräumen im Inneren der Walzen zirkuliert. Als Wärmeübertragungsmedien werden bis zu Walzentemperaturen von etwa 250°C üblicherweise sogenannte Thermoöle, wie die voranstehend im Zusammenhang mit der US-A 3,020,383 erwähnten Wärmeübertragungsmittel, verwendet, für niedrigere Temperaturen kommt auch Wasser in Frage.

Werden höhere Walzentemperaturen als 250°C benötigt, verbietet sich der Einsatz der üblichen Heizmittel, da sich z.B. die Heizöle zu zersetzen beginnen und bei anderen Flüssigkeiten mit sehr hohen Dampfdrücken gerechnet werden muß. Aus Gründen der Betriebssicherheit ist man jedoch allgemein bestrebt, die Beheizung von Heizwalzen ohne aufwendige und wartungsintensive Drucksysteme vorzunehmen.

Im Hochtemperaturbereich bis etwa 600°C standen bisher nur wenige Heizsysteme im praktischen Einsatz. Solch hohe Temperaturen werden beispielsweise bei der Herstellung von Fasern, Papieren, Verbundstoffen oder Folien aus Polytetrafluoräthylen, Polybenzimidazolen oder Polyimiden mit ganz bestimmten Eigenschaften benötigt. In den meisten Fällen wurden für diese Zwecke Strahlungsheizungen wie Quarzstrahler verwendet. Diese Methode ist störungsanfällig und die Walzen weisen zwar über ihren Umfang, nicht aber über ihre Länge an jeder Stelle eine konstante, gewünschte Temperatur auf. Anders ausgedrückt, ist das durch Strahlungsheizungen erzielbare Temperaturprofil nicht ausreichend gleichmäßig. Dadurch kommt es zu Abweichungen bestimmter Eigenschaften der erzeugten Produkte vom gewünschten Wert.

Die Erfindung stellt sich die Aufgabe, die dargelegten Nachteile bekannter Heizsysteme — insbesondere im Hochtemperaturbereich — zu überwinden und eine Heizwalze zu schaffen, welche sowohl im Niedertemperaturbereich ab etwa 150°C als auch im Hochtemperaturbereich bis ca. 600°C folgenden Anforderungen gerecht wird:

Gleichmäßiges Temperaturprofil über die gesamte Arbeitsfläche des Walzenaußenmantels

Lange Standzeiten des Wärmeübertragungsmediums Keine zu hohen Temperaturen an den Lagern der Antriebswelle

Reparaturfreundlichkeit.

Die gestellte Aufgabe wird mit einer Heizwalze der eingangs definierten Art erfindungsgemäß dadurch gelöst, daß

- sich im Innenraum des hohlen Walzenkörpers ein(e) oder mehrere salzartige Verbindung(en) oder (ein) niedrig schmelzende(s) Metall(e) bzw. Metall-Legierung(en) befinden,

- die Heizelemente im zylindrischen Innenteil des Walzenkörpers vorgesehen sind und

- die Temperaturfühler sowohl im zylindrischen Innenteil als auch im zylindrischen Außenmantel des Walzenkörpers angeordnet sind.

Die erfindungsgemäße Heizwalze weist vor allem beim Betrieb im Hochtemperaturbereich ein sehr gleichmäßiges Temperaturprofil auf. Die salzartige Verbindung oder das Metall liegt bei den Betriebstemperaturen der Walze als Schmelze mit sehr guter Wärmeleitfähigkeit vor. Die Schmelze hat nur sehr geringen Dampfdruck, weswegen der hohle Walzenkörper nicht druckfest ausgeführt sein muß. Der unerwünschte Wärmeübergang vom Walzenkörper zur Hohlwelle ist im wesentlichen auf die Wärmeleitung durch die Nabe beschränkt, da der zylindrische Innenteil des Walzenkörpers nur über die Nabe mit der Hohlwelle in direkter Verbindung steht.

Vorteilhaft ist die Hohlwelle antriebsseitig zumindest auf einem Teil ihrer Länge von einem Kühlmantel umgeben. Dieser Kühlmantel ist gegen die Hohlwelle abgedichtet und wird von einem Kühlmittel durchflossen. Auf diese Weise wird die Wärmebelastung der Lager noch weiter vermindert und so deren Lebensdauer gesteigert.

Nach einer besonders bevorzugten Ausführungsform sind als Heizelemente eine Mehrzahl von Heizstäben in radial gleichmäßig verteilten, in axialer Richtung verlaufenden Bohrungen im Innenteil des Walzenkörpers eingebaut.

Die Heizstäbe oder Heizpatronen sind gut geschützt untergebracht, erreichen eine besonders lange Standzeit und sind trotzdem leicht auswechselbar. Auf dem zylindrischen Außenmantel des Walzenkörpers ist eine außerordentlich gleichmäßige Temperaturverteilung erzielbar.

Zweckmäßig ist für den unwahrscheinlichen Fall, daß dennoch ein zu hoher Druck im Inneren des Walzenkörpers aufgebaut wird, in der antriebsseitigen Stirnwand des hohlen Walzenkörpers eine Berstscheibe angeordnet.

Die für die Berstscheibe vorgesehene Öffnung kann vor dem Einsetzen und Befestigen der Berstscheibe zum Einfüllen der salzartigen Verbindung oder des Metalles in den Walzenkörper benützt werden.

An der freien Stirnseite der Walze ist vorzugsweise eine Abdeckhaube angebracht.

Als salzartige Verbindung(en) befinden sich vorteilhaft ein anorganisches Salz oder ein Gemisch solcher Salze mit einem Schmelzpunkt zwischen 120 und 350°C und mit niedrigem Wärmeausdehnungskoeffizienten sowie eine zur Berücksichtigung der Wärmeausdehnung notwendige Gasmenge im Innenraum des hohlen Walzenkörpers.

Beispielsweise eignet sich dafür Kaliumnitrat, Natriumnitrat, Natriumnitrit, Kupfer(I)-chlorid oder ein Gemisch zweier oder mehrerer dieser Salze.

Nach einer weiteren Ausführungsform befinden sich ein Metall oder eine Legierung oder ein Gemisch von Metallen bzw. Legierungen mit einer Schmelztemperatur zwischen etwa 50 und etwa 350°C, vorzugsweise Zinn, Blei oder Wood's-Legierung sowie eine zur Berücksichtigung der Wärmeausdehnung notwendige Gasmenge im Innenraum des hohlen Walzenkörpers.

Bei den verschiedenen Betriebstemperaturen nimmt die Salzschmelze bzw. das geschmolzene Metall ein entsprechendes Volumen ein. Der freie Gasraum im Inneren des Walzenkörpers wird so berechnet, daß sich bei der höchsten vorgesehenen Betriebstemperatur nur ein geringer Überdruck im Walzenkörper einstellt. Jede bekannte Art von Temperaturfühlern, wie Thermoelemente oder Halbleiter-Thermofühler, kann verwendet werden. Auch die Temperaturfühler werden vorzugsweise in gleichen Abständen voneinander im zylindrischen Innenteil und im zylindrischen Außenmantel des Walzenkörpers angeordnet. Die Leitungen von den Temperaturfühlern können über Schleifringe mit Meß- und Regeleinrichtungen verbunden sein. Der Meßstrom von den Temperaturfühlern kann aber auch in kontaktlos übertragbare Hochfrequenzsignale umgewandelt werden.

Die durch die Hohlwelle geführten Stromversorgungsleitungen für die Heizelemente können zweckmäßig über Schleifringe mit einer Stromquelle verbunden sein. Die Heizleistung der Heizelemente wird mittels der bereits erwähnten Regeleinrichtung von irgendeiner bekannten Ausführungsform geregelt. Dank der beschriebenen Anordnung von Temperaturfühlern und Heizelementen und der guten Wärmeleitung der Metall- oder der Salzschmelze läßt sich die Temperatur der erfindungsgemäßen Heizwalze außerordentlich genau einstellen. Darüber hinaus wird ein sehr gleichmäßiges Temperaturprofil über die gesamte Arbeitsfläche der Heizwalze erzielt.

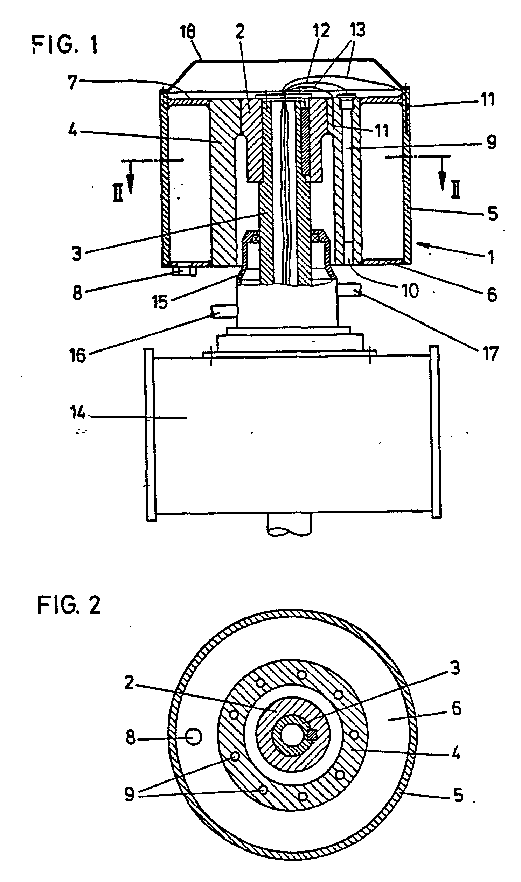

Die Erfindung wird anhand einer in der Zeichnung dargestellten Ausführungsform genauer erläutert. Fig. 1 stellt einen Schnitt entlang der Achse der Heizwalze vor, wobei in Fortsetzung der Hohlwelle auch das Lagergehäuse schematisch dargestellt ist. Fig. 2 zeigt einen Schnitt entlang der Linie II-II der Fig. 1 ohne Lagergehäuse.

Der hohle, allgemein mit 1 bezeichnete Walzenkörper ist mit einer Nabe 2 verbunden, und die Nabe 2 ist mittels einer Keilverbindung an einem Ende der Hohlwelle 3 befestigt. Der vom zylindrischen Innenteil 4, dem zylindrischen Außenmantel 5 und den beiden kreisringförmigen Stirnwänden 6 und 7 begrenzte Hohlraum des Walzenkörpers 1 ist mit einer oder mehreren salzartigen Verbindung(en) oder einem (einer) oder mehreren Metall(en) oder Legierung(en) bis auf einen genau definierten Gaspolster ausgefüllt.

In der antriebsseitigen Stirnwand 6 ist eine Berstscheibe 8 angeordnet. In dem zylindrischen Innenteil 4 sind in gleichen Abständen voneinander in axialer Richtung Heizstäbe bzw. Heizpatronen 9 in Bohrungen 10 eingesetzt. Von den Heizstäben 9 sowie von im Außenmantel 5 und im Innenteil 4 angeordneten Temperaturfühlern 11 sind Leitungen 12, 13 durch die Hohlwelle 3 geführt. Im schematisch dargestellten Lagergehäuse 14 befinden sich Schleifringe, über welche die Stromversorgungsleitungen 12 für die Heizstäbe 9 mit einer Stromquelle verbunden sind. Die Verbindung der elektrischen Leitungen 13 von den Temperaturfühlern 11 mit der nicht dargestellten Meß- und Regeleinrichtung erfolgt in bereits erläuterter Weise entweder kontaktlos oder gleichfalls über Schleifringe im Lagergehäuse 14. Um die Wärmebelastung des Lagers zu verringern, ist ein Kühlmantel 15 vorgesehen, welcher sich teilweise bis unter den Innenteil 4 des Walzenkörpers 1 erstreckt. Der Kühlmantel 15 ist mit hitzebeständigen Dichtungen gegen die Hohlwelle 3 abgedichtet. Durch die Rohrstutzen 16, 17 wird ein Kühlmedium zu- und abgeführt. An der freien Stirnseite der Walze ist eine Abdeckhaube 18 angebracht. Der Antriebsmotor für die Hohlwelle 3 ist nicht dargestellt.

An einer rotierenden erfindungsgemäßen Heizwalze der in der Zeichnung gezeigten Ausführungsform mit einem Außendurchmesser von 500 mm und einer Länge des Walzenkörpers von 370 mm wurden mit einem Kontaktthermometer Temperaturmessungen vorgenommen. Der gewünschte Wert von 312°C wurde an jeder Stelle eingehalten. An den äußersten Rändern der Walze wurden 308°C gemessen, jeweils 2 cm von den Rändern nach innen gerückt 309°C und nach weiteren 2 cm bereits 310°C. Ein derart gleichmäßiges Temperaturprofil mit einer Randabweichung im Bereich von nur etwa 1% war bei so honen Temperaturen mit keiner herkömmlichen Heizwalze bzw. mit keinem bekannten Heizsystem erzielbar.

**Patentansprüche**

1. Heizwalze zur Wärmebehandlung von geformten Materialien mit einer angetriebenen Hohlwelle (3) und einem hohlen, allseitig geschlossen, im Querschnitt kreisringförmigen Walzenkörper (1) zur Aufnahme eines Wärmeübertragungsmediums, wobei Stromversorgungsleitungen (12) für Heizelemente (9) sowie elektrische Leitungen (13) von Temperaturfühlern (11) durch die Hohlwelle (3) geführt sind und wobei die Hohlwelle (3) mittels einer Nabe (2) mit dem Walzenkörper (1) verbunden ist, dadurch gekennzeichnet, daß
- sich im Innenraum des hohlen Walzenkörpers (1) ein(e) oder mehrere salzartige Verbindung(en) oder (ein) niedrig schmelzende(s) Metall(e) bzw. Metall-Legierung(en) befinden,
- die Heizelemente (9) im zylindrischen Innenteil (4) des Walzenkörpers (1) vorgesehen sind und
- die Temperaturfühler (11) sowohl im zylindrischen Innenteil (4) als auch im zylindrischen Außenmantel (5) des Walzenkörpers (1) angeordnet sind.

2. Heizwalze nach Anspruch 1, dadurch gekennzeichnet, daß die Hohlwelle (3) antriebsseitig zumindest auf einem Teil ihrer Länge von einem Kühlmantel (15) umgeben ist.

3. Heizwalze nach einem oder beiden der Ansprüche 1 und 2, dadurch gekennzeichnet, daß als Heizelemente eine Mehrzahl von Heizstäben (9) in radial gleichmäßig verteilten, in axialer Richtung verlaufenden Bohrungen (10) im Innenteil (4) des Walzenkörpers eingebaut sind.

4. Heizwalze nach einem oder mehreren der Ansprüche 1 bis 3, dadurch gekennzeichnet, daß in der antriebsseitigen Stirnwand (6) des hohlen Walzenkörpers (1) eine Berstscheibe (8) angeordnet ist.

5. Heizwalze nach einem oder mehreren der Ansprüche 1 bis 4, dadurch gekennzeichnet, daß an der freien Stirnseite der Walze eine Abdeckhaube (18) angebracht ist.

6. Heizwalze nach einem oder mehreren der Ansprüche 1 bis 5, dadurch gekennzeichnet, daß sich als salzartige Verbindung(en) ein anorganisches Salz oder ein Gemisch solcher Salze mit einem Schmelzpunkt zwischen 120 und 350°C und mit niedrigem Wärmeausdehnungskoeffizienten sowie eine zur Berücksichtigung der Wärmeausdehnung notwendige Gasmenge im Innenraum des hohlen Walzenkörpers (1) befinden.

7. Heizwalze nach Anspruch 6, dadurch gekennzeichnet, daß sich Kaliumnitrat, Natriumnitrat, Natriumnitrit, Kupfer(I)-chlorid oder ein Gemisch zweier oder mehrerer dieser Salze im Innenraum des hohlen Walzenkörpers (1) befinden.

8. Heizwalze nach einem oder mehreren der Ansprüche 1 bis 5, dadurch gekennzeichnet, daß sich ein Metall oder eine Legierung oder ein Gemisch von Metallen bzw. Legierungen mit einer Schmelztemperatur zwischen etwa 50 und etwa 350°C, vorzugsweise Zinn, Blei oder Wood's-Legierung, sowie eine zur Berücksichtigung der Wärmeausdehnung notwendige Gasmenge im Innenraum des hohlen Walzenkörpers (1) befinden.

**Revendications**

1. Cylindre chauffant pour le traitement thermique de produits façonnés avec un arbre creux (3) entraîné et un corps de cylindre (1) creux, fermé de tous côtés, de section transversale annulaire, destiné à recevoir un agent de transmission de la chaleur, des conduites d'alimentation en courant (12) pour des éléments chauffants (9) ainsi que les conduites électriques (13) de capteurs de température (11) passant dans l'arbre creux (3), et l'arbre creux (3) étant relié au corps du cylindre (1) à l'aide d'un moyeu (2), caractérisé en ce que
- un ou plusieurs composés analogues à des sels ou un ou plusieurs métaux ou alliages métalliques à faible point de fusion se trouvent dans la cavité interne du corps creux (1) du cylindre,
- les éléments chauffant (9) sont prévus dans la partie interne (4) cylindrique du corps du cylindre (1) et
- les capteurs de température (11) sont disposés dans la partie interne (4) cylindrique et aussi dans l'enveloppe externe cylindrique (5) du corps (1) du cylindre.

2. Cylindre chauffant selon la revendication 1, caractérisé en ce que l'arbre creux (3) est entouré du côté de l'entraînement par une chemise réfrigérante (15) au moins sur une partie de sa longueur.

3. Cylindre chauffant selon l'une des revendications 1 et 2 ou les deux, caractérisé en ce que comme éléments chauffants sont disposées une pluralité de barres chauffantes (9) dans des alésages (10) qui s'étendent en direction axiale et qui sont répartis régulièrement en direction radiale dans la partie interne (4) du corps du cylindre.

4. Cylindre chauffant selon une ou plusieurs des revendications 1 à 3, caractérisé en ce qu'une plaque de rupture (8) est disposée dans la paroi frontale (6) du côté de l'entraînement du corps creux (1) du cylindre.

5. Cylindre chauffant selon une ou plusieurs des revendications 1 à 4, caractérisé en ce qu'un couvercle (18) est disposé au niveau du côté frontal libre du cylindre.

6. Cylindre chauffant selon une ou plusieurs des revendications 1 à 5, caractérisé en ce que, concernant le ou les composés analogues à des sels, un sel inorganique ou un mélange de tels sels présentant un point de fusion compris entre 120 et 350°C et un faible coefficient de dilatation thermique se trouve dans la cavité interne du corps creux (1) du cylindre de même qu'une quantité de gaz nécessaire pour tenir compte de la dilatation thermique.

7. Cylindre chauffant selon la revendication 6, caractérisé en ce que du nitrate de potassium, du nitrate de sodium, du nitrite de sodium, du chlorure de cuivre (I) ou un mélange de deux de ces sels ou plus se trouvent dans la cavité interne du corps creux (1) du cylindre.

8. Cylindre chauffant selon une ou plusieurs des revendications 1 à 5, caractérisé en ce qu'un métal ou alliage ou un mélange de métaux ou d'alliages présentant une température de fusion comprise entre environ 50 et environ 350°C, de préférence l'étain, le plomb ou l'alliage Wood, se trouve dans la cavité interne du corps creux (1) du cylindre, de même qu'une quantité de gaz nécessaire pour tenir compte de la dilatation thermique.

## Claims

1. Heated roll for thermally treating formed materials having a driven hollow shaft (3) and a hollow roll body (1) closed on all sides and of circular ring shaped cross section for accommodating a heat transfer medium, current supply lines (12) for heating elements (9) as well as electric lines (13) of temperature probes (11) being guided through the hollow shaft (3) and the hollow shaft (3) being connected with the roll body (1) by means of a hub (2), characterised in that

- one or more salt-like compound(s) or (a) low melting metal(s) and/or metal alloy(s) is (are) contained in the interior space of the hollow roll body (1),

- the heating elements (9) are provided in the cylindrical inner part (4) of the roll body (1), and

- the temperature probes (11) are arranged both in the cylindrical inner part (4) as well as in the cylindrical outer shell (5) of the roll body (1).

2. Heated roll according to claim 1, characterised in that the hollow shaft (3), on the side of its drive, is surrounded by a cooling jacket (15) over at least part of its length.

3. Heated roll according to one or both of claims 1 and 2, characterised in that, as the heating elements, a plurality of heating rods (9) are installed in radially evenly distributed bores (10) extending in the axial direction in the inner part (4) of the roll body.

4. Heated roll according to one or more of claims 1 to 3, characterised in that in the drive-side front wall (6) of the hollow roll body (1) a bursting disc (8) is arranged.

5. Heated roll according to one or more of claims 1 to 4, characterised in that a covering hood (18) is provided on the free front side of the roll.

6. Heated roll according to one or more of claims 1 to 5, characterised in that, as the salt-like compound(s), an inorganic salt or a mixture of such salts having a melting point of between 120 and 350°C and a low thermal expansion coefficient as well as an amount of gas necessary to take into account the thermal expansion are contained in the interior space of the hollow roll body (1).

7. Heated roll according to claim 6, characterised in that potassium nitrate, sodium nitrate, sodium nitrite, copper (I) chloride or a mixture of two or more of these salts are contained in the interior space of the hollow roll body (1).

8. Heated roll according to one or more of claims 1 to 5, characterised in that a metal or an alloy or a mixture of metals and/or alloys having a melting temperature of between about 50 and about 350°C, preferably tin, lead or Wood's alloy, as well as an amount of gas necessary to take into account the thermal expansion are contained in the interior space of the hollow roll body (1).

FIG. 1

FIG. 2